# EUROPÄISCHE PATENTANMELDUNG

(11) **EP 0 701 383 A1**
(43) Veröffentlichungstag der Anmeldung: **13.03.1996**
(21) Anmeldenummer: 95113365.1
(22) Anmeldetag: 25.08.1995
(51) Int. Cl.: H04Q 9/14

(54) **Verfahren und Vorrichtung zur Übertragung von Daten**

(30) Priorität: 08.09.1994 CH 2743/94
(71) Anmelder: ZELLWEGER LUWA AG, CH-8610 Uster (CH)
(72) Erfinder: Kreis, Jürg, CH-8604 Volketswil (CH); Heusser, Johannes, CH-8345 Adetswil (CH)
(74) Vertreter: Ellenberger, Maurice

(57) **Zusammenfassung**

In einer Vorrichtung zur Übertragung von Daten zwischen einer Zentraleinheit (1) und mindestens einer Funktionseinheit (2, 3) über Leitungen (6, 7), wobei jede Funktionseinheit mit mindestens einem Sensor oder Aktor verbunden ist, weist jede Funktionseinheit Mittel (6, 7, 11, 12, 13, 14) zur Übertragung von Daten an eine weitere Funktionseinheit und Mittel zum Speichern (10) einer austauschbaren Adresse auf. Die Vorrichtung hat drei unterschiedliche Betriebszustände, die es je nach Bedarf ermöglichen, die Funktionseinheiten beliebig zu adressieren, Datanaustausch zu betreiben oder Daten nur zu empfangen.

## Beschreibung

Die Erfindung betrifft eine Vorrichtung und ein Verfahren zur Übertragung von Daten zwischen einer Zentraleinheit (Master) und mindestens einer Funktionseinheit (Slave) über mindestens zwei Leitungen wobei jede Funktionseinheit mit mindestens einem Sensor oder Aktor verbunden ist.

Eine solche Vorrichtung ist beispielsweise als Bus-System unter der Bezeichnung INTERBUS-S allgemein bekannt und auch normiert. Dieses Bus-System ist so aufgebaut, dass es wie ein Schieberegister arbeitet. Das ergibt den Vorteil, dass die einzelnen Teilnehmer nicht durch Adressen gekennzeichnet sein müssen. Andererseits können die einzelnen Teilnehmer oder die einzelnen Funktionseinheiten und somit auch die Aktoren und Sensoren von der Zentraleinheit nicht einzeln angesteuert werden.

Es sind andere Vorrichtungen dieser Art bekannt, bei denen die Adressen vorausgehend einprogrammiert werden müssen, oder die überhaupt keine Adressen benötigen, weil die Daten an sich von den Teilnehmern selektiv aufgenommen werden. Doch solche Systeme können nur unter gegebenen spezifischen Umständen eingesetzt werden.

Es ist deshalb die Aufgabe der Erfindung, wie sie in den Patentansprüchen gekennzeichnet ist, ein Verfahren und eine Vorrichtung zu schaffen, die auf kostengünstige Art und Weise den Austausch von Daten zwischen einer Zentrale und einzelnen Teilnehmern gezielt erlaubt und wobei die Ansteuerung der Teilnehmer immer wieder und auf einfache Art neu geregelt werden kann.

Diese Aufgabe wird dadurch gelöst, dass eine Zentraleinheit und eine oder vorzugsweise mehrere Funktionseinheiten oder Teilnehmer über mindestens Zwei Datenleitungen und eventuelle weitere Speiseleitungen in Serie geschaltet werden. In dem so entstandenen Bus-System können die Daten wie in einem Schieberegister von einer Funktionseinheit an die andere weitergegeben werden. Dabei werden die Daten in jeder Funktionseinheit nach dem Eintreffen gefiltert und und vor dem Verlassen verstärkt. Alle Daten sind mit Adressen versehen, die in den einzelnen Funktionseinheiten mit vorab gespeicherten Adressen verglichen werden, so dass nur diejenigen Daten in einer Funktionseinheit weiter verwendet werden, die die richtige Adresse aufweisen. Die Adressen werden in den einzelnen Funktionseinheiten nicht vorprogrammiert, sondern einfach eingelesen, was bei jeder Betriebsaufnahme erfolgen kann. Dafür ist ein spezieller Betriebsmodus vorgesehen.

Die durch die erfindungsgemässe Lösung erreichten Vorteile sind insbesondere darin zu sehen, dass in diesem Sinne Daten über kurze und mittlere Entfernungen kostengünstig verteilt und für die Übertragung von Befehlen an Aktoren oder für die Gewinnung von Messwerten oder Einstellwerten von Sensoren übertragen werden können. Die hohe Effizienz der Übertragung wird durch ein sehr kompaktes Kommunikationsprotokoll erreicht, dank dem schon eine kleine Übertragungsrate genügt. Die Adressenzuweisung an die einzelnen Funktionseinheiten geschieht jeweils mit der Inbetriebnahme des Systems und kann demzufolge jederzeit einfach neu gewählt werden. Damit kann das System einfach umkonfiguriert werden. Durch die genannte Art der Adressierung ist es nun möglich, die Aktoren und Sensoren in Gruppen zusammenzufassen, die jeweils gleich angesteuert werden. Die erfindungsgemässe Auslegung der Vorrichtung ermöglicht es zudem auch einer Funktionseinheit, die Zentraleinheit aufzurufen. Damit kann die Funktionseinheit die Zentraleinheit auffordern, sofort mit der entsprechenden Funktionseinheit in Kontakt treten. Zudem sind verschiedene Prioritäten möglich. Bei gleicher Priorität entscheidet die Position innerhalb des Buses mit welcher Funktionseinheit zuerst Daten ausgetauscht werden. Dies ermöglicht eine weitere Entlastung der Funktionseinheiten und der Zentraleinheit und verhindert eine unerwünschte Überlagerung von Daten, die durch das Zusammentreffen zweier Datenpakete entstehen könnte. Wird der Bus ringförmig, d.h. geschlossen ausgelegt, so wird es bei einem Ausfall einer Funktionseinheit möglich, die Betriebsbereitschaft wieder herzustellen. Voraussetzung dazu ist aber, dass die Funktionseinheiten mit den Treibern gleich oder symmetrisch aufgebaut sind. Die Betriebsbereitschaft wird durch die erneute Konfigurierung der Vorrichtung erreicht. Eine Diagnose über fehlerhaft arbeitende Funktionseinheiten kann meistens recht einfach vorgenommen werden, da sich Störungen nicht auf das ganze System auswirken und die Fehlerhaften Teile damit leichter einzugrenzen sind. Jede Funktionseinheit ist mit einem Eingangsfilter und einem Verstärker ausgestattet, die in Serie in die Verbindungsleitungen zwischen den Funktionseinheiten eingesetzt sind. So ist das zu übertragende Signal nach jeder Funktionseinheit wieder frisch aufbereitet, so dass man lange Verbindungsleitungen vorsehen kann.

Im folgenden wird die Erfindung anhand eines Beispiels und mit Bezug auf die beiliegenden Figuren näher erläutert, wobei
Figur 1 und 2 je in schematischer Darstellung den Aufbau der Vorrichtung und
Figuren 3 und 4 vereinfacht die Vorrichtung in zwei Ausführungsformen zeigen.

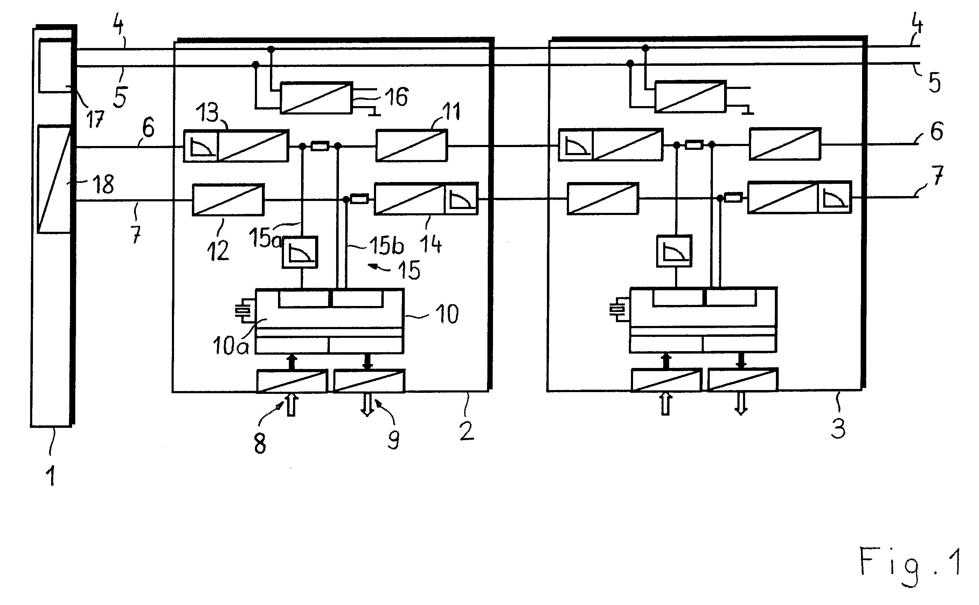

Figur 1 zeigt mindestens teilweise eine Zentraleinheit 1 an welche über Leitungen 4, 5, 6 und 7 beispielsweise zwei Funktionseinheiten 2 und 3 angeschlossen sind.

Jede Funktionseinheit 2, 3 weist Anschlüsse 8 und 9 für einen oder mehrere Sensoren oder für einen oder mehrere Aktoren auf. Die Aktoren und Sensoren sind hier, weil sie allgemein bekannt sind, nicht näher dargestellt. Neben diesen Anschlüssen weisen die Funktionseinheiten 2, 3 einen Prozessor 10, Ausgangsverstärker 11 und 12, Eingangsfilter 13 und 14 sowie Verbindungen 15 zwischen dem Prozessor 10 und den Leitungen 6 und 7 auf. Damit weist jede Funktionseinheit 2, 3 die entsprechenden Mittel zur Übertragung der Daten über weitere Funktionseinheiten an die Zentraleinheit 1 auf. Der Prozessor 10 weist insbesondere auch einen Rechner- und Speicherteil 10a auf, der zur Speicherung und zur Überprüfung einer Adresse dient. In der Funktionseinheit 2, 3 ist an die Leitungen 4 und 5, die zur Speisung der Funktionseinheit dienen, eine Stromversorgung 16 angeschlossen, die in hier nicht näher dargestellter aber in bekannter Weise die vorgehend genannten Elemente wie Ausgangsverstärker 11, 12, Eingangsfilter 13, 14 sowie den Prozessor 10 mit elektrischer Energie versorgt.

Die Zentraleinheit 1 weist insbesondere ebenfalls eine Stromversorgung 17, die an die Leitungen 4 und 5 angeschlossen ist, sowie eine Schnittstelle 18 auf, die normiert ist und beispielsweise unter der Typbezeichnung RS232 oder RS485 bekannt ist. Die Zentraleinheit 1 ist Teil eines Rechners, wie unter der Bezeichnung "Personal Computer (PC)" allgemein bekannt, oder Teil eines Steuergerätes. Der PC oder das Steuergerät braucht lediglich eine passende Schnittstelle 18 dazu.

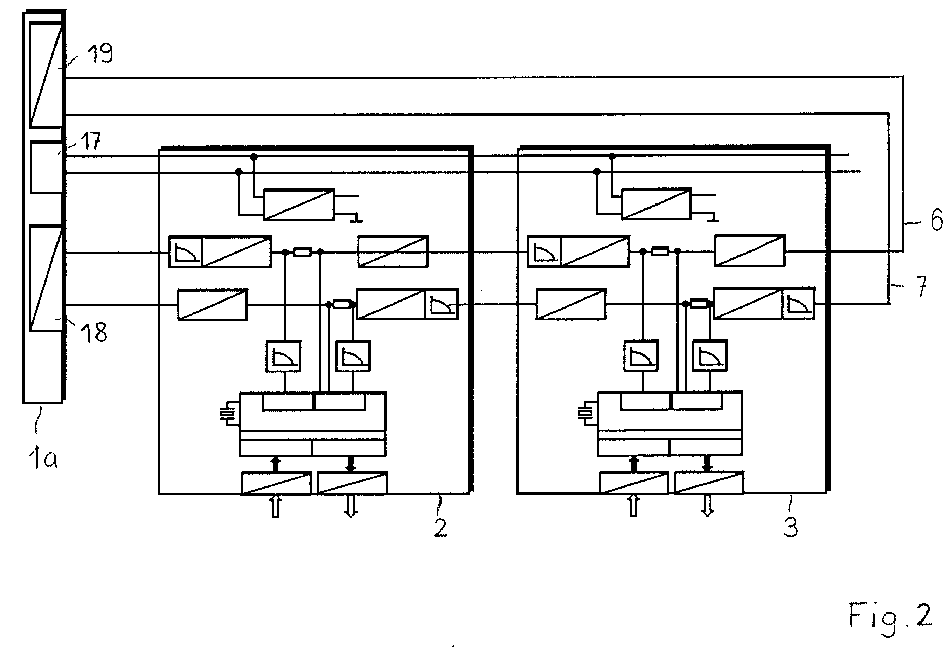

Figur 2 zeigt im wesentlichen die gleiche Anordung wie in Fig. 1 aber mit dem Unterschied, dass die Leitungen 6 und 7 an eine weitere Schnittstelle 19 in der Zentraleinheit 1a zurückgeführt sind. Damit ist ein ringförmiger geschlossener Bus gebildet.

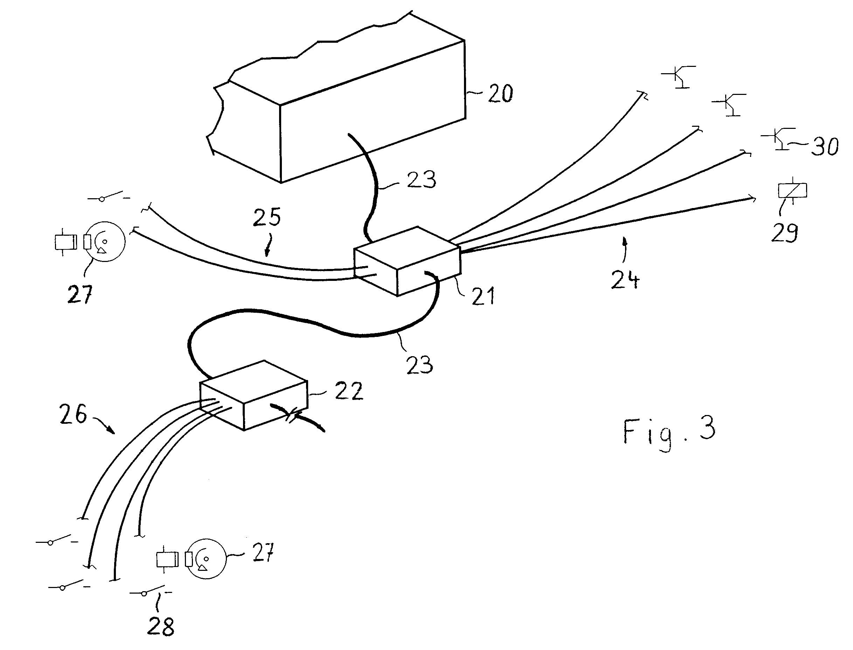

Figur 3 zeigt in vereinfachter Darstellung eine erfindungsgemässe Vorrichtung, also ein Bussystem, mit einer Zentraleinheit 20, Funktionseinheiten 21 und 22, die über den Bus 23 verbunden sind. Über Leitungen 24, 25 und 26 sind an die Funktionseinheiten 21 und 22 Sensoren 27 und Aktoren 28, 29, 30, hier beispielsweise als Schalter ausgebildet, angeschlossen.

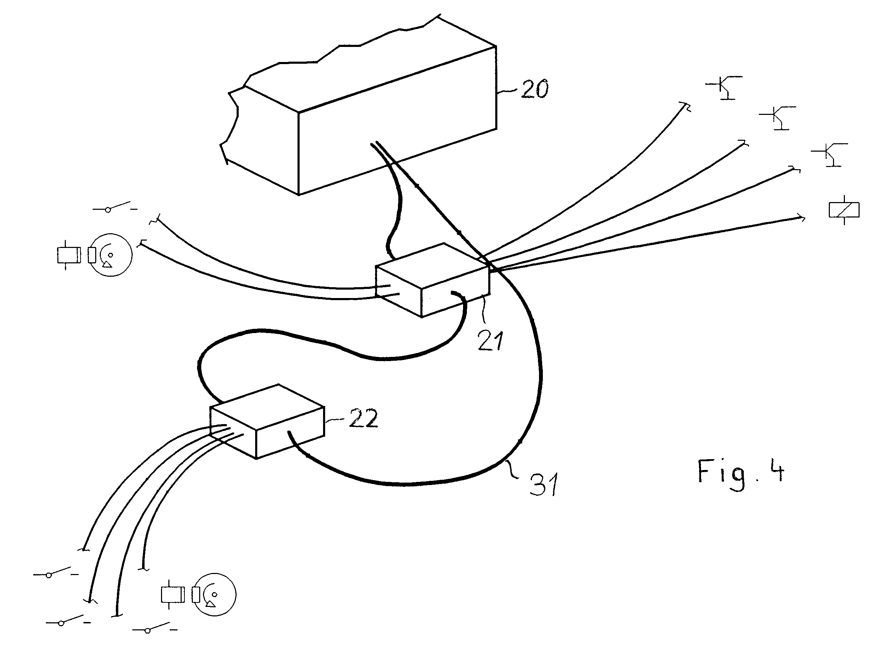

Figur 4 zeigt in ähnlicher Weise wie Fig. 3 die Vorrichtung mit einer Zentraleinheit 20 und Funktionseinheiten 21, 22, die aber hier über einen geschlossenen oder ringförmigen Bus 31 miteinander verbunden sind.

Für die Darlegung der Arbeitsweise der Vorrichtung sind drei Betriebsfälle zu unterscheiden, die nachfolgend beschrieben werden: Initialiserung, Normalbetrieb und Broadcastbetrieb.

Nach dem Anlegen der Stromversorgung, sobald in den Leitungen 4 und 5 ein Strom fliesst, sind die Funktionseinheiten 2 und 3 zunächst inaktiv. Dies bedeutet, dass sie wohl Daten über die Leitung 6 zur nächsten Funktionseinheit weiterleiten, selbst aber keine Daten an den Bus oder die Leitung 7 abgeben. Dazu ist die Leitung 6 nur über die Leitung 15a mit dem Prozessor 10 verbunden.

Aus diesem oben beschriebenen Zustand kann der erste Betriebsmodus, die Initialisierung oder die Ausgabe von Adressen erfolgen. Dies geschieht indem eine Instruktion über die Leitungen 6 und 15a an den Prozessor 10 abgegeben wird, die bewirkt, dass der Ausgangsverstärker 11 und damit der Datenausgang ausgeschaltet wird. Die Zentraleinheit 1 kann damit nur noch mit der Funktionseinheit 2 kommunizieren. Über die Leitungen 6 und 15a kann nun die Zentraleinheit 1 die Adresse im Prozessor 10 beispielsweise von "Null" auf einen anderen Wert, beispielsweise "Eins" setzen. Damit ist die Funktionseinheit 2 adressiert und der Prozessor 10 sorgt dafür, dass der Ausgangsverstärker 11 wieder aktiviert wird.

Nachdem nun die Funktionseinheit 2 adressiert ist, kann die Zentraleinheit 1 nun auch mit der Funktionseinheit 3 kommunizieren. Gibt die Zentraleinheit 1 nun eine weitere Adresse beispielsweise mit dem Wert "Zwei" aus, so wird damit die Funktionseinheit 3 adressiert. Gibt die Zentraleinheit die Adresse "Zwei" ein weiteres Mal aus, so wird auch eine weitere Funktionseinheit mit der gleichen Adresse versehen.

Nach diesem Verfahren lässt sich jede Funktionseinheit adressieren. Funktionseinheiten die in der Adressierphase sind, geben eine Quittung an die Zentraleinheit ab. Damit lässt sich feststellen, wieviele Funktionseinheiten vorhanden sind, oder wieviele Funktionseinheiten noch aktivierbar oder eben funktionstüchtig sind, denn sobald die Funktionseinheit adressiert ist, kann sie auch auf Daten reagieren. Reagiert sie nicht, so ist sie defekt, oder hat die Zentraleinheit eine Adresse zuviel ausgegeben, so wird sie von der betreffenden Funktionseinheit nie eine Rückmeldung erhalten.

Im zweiten Betriebsmodus, dem Normalbetrieb lassen sich die einzelnen Funktionseinheiten über ihre Adresse individuell ansprechen. Nachdem eine Funktionseinheit ihre Adresse empfangen hat, bleibt sie solange aktiv, bis eine andere Funktionseinheit mit ihrer Adresse abgerufen wird. Haben mehrere Funktionseinheiten oder Teilnehmer dieselbe Adresse erhalten, so lassen sich damit gleichzeitig mehrere Funktionseinheiten und damit mehrere Sensoren oder Aktoren ansprechen. Die Zentraleinheit 1 empfängt aber in einem solchen Fall nur noch Rückmeldungen von der Funktionseinheit mit der gleichen Adresse, die auch am nächsten bei der Zentraleinheit 1 liegt. Der Unterschied zwischen der Funktionseinheit die gerade durch ihre Adresse angesprochen ist und den anderen Funktionseinheiten liegt darin, dass bei der angesprochenen Funktionseinheit die Leitung 15b durch den Prozessor 10 aktiviert ist. Bei der nachfolgenden Funktionseinheit sind zudem auch die Eingangsfilter 14 und die Ausgangsverstärker 12 inaktiv.

Im dritten Betriebsmodus, dem Broadcastbetrieb, bei dem eine generelle Übertragung an alle Funktionseinheiten stattfindet, sind alle Funktionseinheiten aktiv, darin sind aber nur die Eingangsfilter 13 und die Ausgangsverstärker 11 durch den Prozessor 11 aktiviert. Das bedeutet, dass die Funktionseinheiten 2, 3 zwar Daten empfangen aber keine Daten ausgeben können. Auf diese Weise können beispielsweise gewisse Tests ausgeführt werden. Beispielsweise können mit den Funktionseinheiten verbundene Aktoren in eine bestimmte Position gebracht werden, woraus ihre Funktionstüchtigkeit erkennbar wird.

Durch die getrennt über Leitungen 4, 5 vorgesehene Speisung der Sensoren und Aktoren bleiben diese in allen drei Betriebsmodi funktionsfähig.

## Patentansprüche

1. Vorrichtung zur Übertragung von Daten zwischen einer Zentraleinheit (1) und mindestens einer Funktionseinheit (2, 3) über mindestens zwei Leitungen (6, 7) wobei jede Funktionseinheit mit mindestens einem Sensor oder Aktor verbunden ist, dadurch gekennzeichnet, dass jede Funktionseinheit Mittel (6, 7, 11, 12, 13, 14) zur Übertragung von Daten an eine weitere Funktionseinheit und Mittel zum Speichern (10) einer austauschbaren Adresse aufweist.

2. Vorrichtung nach Anspruch 1, dadurch gekennzeichnet, dass jede Funktionseinheit eine erste Leitung (6) für die Übertragung von Daten in einer ersten Richtung, eine zweite Leitung (7) für die Übertragung von Daten in einer zweiten Richtung und einen an die erste und die zweite Leitung angeschlossenen Prozessor (10) aufweist.

3. Vorrichtung nach Anspruch 2, dadurch gekennzeichnet, dass in die erste und in die zweite Leitung je ein Eingangsfilter (13, 14) und je ein Ausgangsverstärker (11, 12) in Serie eingeschaltet ist.

4. Vorrichtung nach Anspruch 1, dadurch gekennzeichnet, dass jede Funktionseinheit zusätzlich über mindestens eine Speiseleitung (4, 5) mit der Zentraleinheit (1) verbunden ist.

5. Verfahren zur Übertragung von Daten zwischen einer Zentraleinheit und mindestens einer Funktionseinheit, wobei die Daten wie in einem Schieberegister von der Zentraleinheit an die mindestens eine Funktionseinheit abgegeben werden, dadurch gekennzeichnet, dass in einem ersten Betriebsmodus der Funktionseinheit von der Zentraleinheit eine Adresse zugeordnet wird, dass in einem zweiten Betriebsmodus die Zentraleinheit Daten mit einzelnen Funktionseinheiten über die Adressen gezielt austauschen kann und dass in einem dritten Betriebsmodus alle Funktionseinheiten gemeinsam und ohne Adressen Daten von der Zentraleinheit empfangen können.

6. Verfahren nach Anspruch 5, dadurch gekennzeichnet, dass im ersten Betriebsmodus die Adresse im Prozessor gespeichert wird und dass jede Adresse beliebig einer oder mehreren Funktionseinheiten zugeordnet werden kann.

7. Verfahren nach Anspruch 5, dadurch gekennzeichnet, dass die Daten im zweiten Betriebsmodus durch die Adressen selektiv mit bestimmten Funktionseinheiten ausgetauscht werden können.

8. Verfahren nach Anspruch 5, dadurch gekennzeichnet, dass die Daten im dritten Betriebsmodus nur empfangen werden können.

9. Verfahren nach Anspruch 5, dadurch gekennzeichnet, das im ersten, zweiten und dritten Betriebsmodus die Funktionsfähigkeit der Sensoren und Aktoren erhalten bleibt.
